# EUROPÄISCHE PATENTANMELDUNG

(11) **EP 2 821 207 A1**
(43) Veröffentlichungstag der Anmeldung: **07.01.2015**
(21) Anmeldenummer: 13174879.0
(22) Anmeldetag: 03.07.2013
(51) Int. Cl.: B29C 67/24, B29B 7/90

(54) **Verfahren und Spritzgiessanlage zur Herstellung von intumeszierenden Reaktionskunststoffformteilen und Reaktionskunststoffformteil**

(71) Anmelder: HILTI Aktiengesellschaft, 9494 Schaan (LI)
(72) Erfinder: Münzenberger, Herbert, 65191 Wiesbaden (DE)
(74) Vertreter: Hilti Aktiengesellschaft Corporate Intellectual Property

(57) **Zusammenfassung**

Ein Verfahren zur Herstellung von intumeszierenden Kunststoffformteilen, die aus einem Reaktionskunststoff bestehen, die intumeszierende Additive und Glasfasern enthalten, weist die folgenden Schritte auf: Bereitstellen einer Additivmischung aus den intumeszierenden Additiven und den Glasfasern, Vermischen der Additivmischung und der Komponenten des Kunststoffs, wobei eine homogene Masse erhalten wird, Einbringen der Masse aus den Komponenten des Kunststoffs und der Additivmischung in eine Form eingebracht, Aushärten und gegebenenfalls Aufschäumen der Masse. Die Erfindung betrifft des Weiteren eine Spritzgießanlage zur Durchführung dieses Verfahren sowie ein Kunststoffformteil, das mit diesem Verfahren hergestellt ist.

## Beschreibung

Die Erfindung betrifft ein Verfahren sowie eine Spritzgießanlage zur Herstellung von intumeszierenden Reaktionskunststoffformteilen, die aus einem Kunststoff bestehen, die eine Additivmischung aus intumeszierenden Füllstoffen und Glasfasern enthalten. Die Erfindung betrifft des Weiteren ein intumeszierendes Kunststoffformteil.

Solche Reaktionskunststoffformteile (hierin auch kurz als Formteil bezeichnet) bestehen aus einem Reaktionskunststoff, insbesondere einem Schaumkunststoff, der je nach Verwendungszweck des Formteils Zuschlagstoffe, wie Additive und/oder Füllstoffe, enthalten kann. Der Kunststoff (Polymer) wird auch als Bindemittel bezeichnet und ist aus der Reaktion von mindestens zwei reaktiven Verbindungen, die zu einem reaktiven Gemisch vermischt werden, erhältlich. Die Reaktion erfolgt im Wesentlichen alleine durch das Zusammenbringen der Komponenten, ohne weiteren Energieeintrag von außen, wie etwa Wärme. Das Formteil kann weitere Zusätze, wie Zusatzstoffe und Hilfsmittel enthalten, wobei diese bei der Herstellung dem reaktiven Gemisch zugegeben werden. *"Additive"* im Sinne der Erfindung sind dabei Zusatzstoffe, die einem Stoffgemisch zugesetzt werden, um bestimmte Eigenschaften zu erreichen oder zu verbessern, wie Herstellung, Lagerung, Verarbeitung oder Produkteigenschaften während und nach der Gebrauchsphase. *"Füllstoffe"* im Sinne der Erfindung sind Zusatzstoffe, die das Volumen eines Stoffgemischs erhöhen, ohne die wesentlichen Eigenschaften zu ändern.

Ein übliches Verfahren zur Herstellung derartiger Formteile ist das Reaktionsspritzgießen oder RSG-Verfahren (RIM). Dabei werden die Komponenten des reaktiven Gemisches und eventuell die weiteren Zusätze in einem Mischer, wie einem Mischkopf, intensiv gemischt und unmittelbar anschließend als Reaktionsmasse in ein formgebendes Werkzeug gespritzt. Die Aushärtung, d.h. die Reaktion der Komponenten des reaktiven Gemisches zu dem Kunststoff (hierin auch als Polymer bezeichnet), und im Falle von Schaumformteilen, das Aufschäumen des gebildeten Polymers finden in der Form statt. Das Verfahren findet bevorzugt bei der Herstellung von Schaumformteilen aus Polyurethan Verwendung.

Um intumeszierende Formteile herzustellen, die unter starker Hitzeeinwirkung, wie etwa im Falle eines Brandes, ihr Volumen vergrößern und so beispielsweise Wand- oder Deckendurchbrüche abdichten, wird ein Stoffgemisch beigefügt, welches im Brandfall die Intumeszenz bewirkt. Das Stoffgemisch wird zusätzlich zu den reaktiven Komponenten des Bindemittels dem Mischkopf zugeführt. Das Stoffgemisch führt dazu, dass das erweichende und gegebenenfalls schmelzende Schaumformteil, unter starker Hitzeeinwirkung sein Volumen vergrößert bzw. ein inertes Gas bereitstellt, durch das die Volumenvergrößerung hervorgerufen wird. Im Folgenden wird das Stoffgemisch auch als Additivmischung bezeichnet.

Die Formteile, insbesondere lange Formteile, wie Rundschnüre, sind nicht sehr stabil und brechen leicht auseinander.

Bei größeren Brandschutzelementen wird auch häufig beobachtet, dass bei fortgeschrittenem Abbrand des Brandschutzsteins die bereits gebildete Asche abfällt oder der noch nicht verbrannte Teil des Brandschutzsteins aus dem Schott herausfällt. Dies ist zum einen darauf zurückzuführen, dass sich die Matrix im Falle eines Brandes zu schmelzen beginnt wodurch erst die Intumeszenz der Additive stattfinden kann. Allerdings schwächt die Zone der flüssigen Matrix den Verbund mit der bereits gebildeten Aschekruste. Darüber hinaus kann die Intumeszenz dazu beitragen, dass der noch unverbrannte Teil des Brandschutzsteins aus der Abschottung hinaus geschoben wird. Insbesondere bei großen Deckenschotts kann dies problematisch werden.

Die Schwächung des Verbundes zwischen der Aschekruste und dem noch unverbrannten Teil des Brandschutzsteins kann bei dem in den USA vorgeschriebenen Hose-Stream-Test, bei dem nach dem Brand die Aschekruste einem starken Wasserstrahl standhalten muss, zum Problem werden.

Um die Stabilität des Formteils an sich und des unter Hitzeeinwirkung expandierten Formkörpers sowie der sich gebildeten Aschekruste zu verbessern, ist aus dem Stand der Technik bekannt, Glasfasern in die intumeszierenden Formteilen einzubringen. Diese stabilisieren das Formteil vor dessen Gebrauch. Im Brandfall, wenn das Formteil sich zersetzt und intumesziert, verstärken die Glasfasern die gebildete Aschekruste. Dadurch kann das Formteil beispielsweise einem erhöhten Wasserdruck, wie er beim Löschen eines Brandes entsteht, standhalten.

Um eine einheitliche Stabilität des Formteils zu erreichen, ist es aber erforderlich, die Glasfasern gleichmäßig im Formteil zu verteilen. Die Glasfasern lassen sich prinzipiell in einer der reaktiven Komponenten, etwa der Polyolkomponente bei der Herstellung von Polyurethanformteilen aufschließen. Da diese Komponente aber auf den Misch- und Dosieranlagen permanent im Kreislauf geführt werden, würden die Pumpen sehr schnell verschleißen. Daher werden die Glasfasern nicht in den reaktiven Komponenten aufgeschlossen und dem Mischer zugeführt.

Aufgabe der Erfindung ist es, ein Verfahren sowie eine Spritzgießanlage bereitzustellen, die bei der Herstellung des Formteils eine gleichmäßige Verteilung der Glasfasern im fertigen Formteil ermöglichen. Aufgabe der Erfindung ist es des Weiteren, ein solches Formteil bereitzustellen.

Zur Lösung der Aufgabe ist ein Verfahren zur Herstellung von intumeszierenden Formteil vorgesehen, die aus einem Reaktionskunststoff, insbesondere Polyurethan, bestehen und die intumeszierende Additive sowie Glasfasern enthalten, wobei das Verfahren die folgenden Schritte aufweist:
- Bereitstellen einer Additivmischung aus den intumeszierenden Additiven und den Glasfasern,
- Vermischen der erhaltenen Additivmischung und der Komponenten des Polymers,
- Einbringen und Aushärten der Masse aus den Komponenten des Polymers und der Additivmischung und
- gegebenenfalls Aufschäumen der Masse.

Der erste Schritt erfolgt dabei separat zur Bereitstellung der Komponenten des Polymers. Es wird eine Additivmischung erhalten, in der die Glasfasern homogen in den intumeszierenden Additiven verteilt sind. Dabei kann es sich um eine Mischung aller Additive handeln. Alternativ können die Additive auch auf zwei oder mehrere Einzelmischungen aufgeteilt sein, abhängig von der Anzahl der zur Verfügung stehenden Leitungen, in denen die Mischungen geführt werden.

Der zweite Schritt, das Vermischen der in Schritt 1 bereitgestellten Additivmischung mit den Komponenten des Polymers, erfolgt in einer Mehrkomponentenmisch- und Dosieranlage. Es wird eine Masse erhalten, in der die Additivmischung homogen in den Komponenten des Polymers verteilt ist. Auch hierbei können die Komponenten des Bindemittels aus mehreren Einzelkomponenten bestehen, die getrennt dem Mischkopf zugeführt werden können, abhängig von der Anzahl der zur Verfügung stehenden Leitungen, in denen die Komponenten geführt werden.

Der Erfindung liegt die Überlegung zugrunde, die Glasfasern gleichmäßig mit den intumeszierenden Additiven zu vermischen und diese Additivmischung anschließend mit den Komponenten des Polymers zu vermischen. In den intumeszierenden Additiven lassen sich die Glasfasern sehr gut aufschließen und mit diesen vermischen. Das Gemisch kann nach dem Mischvorgang problemlos gelagert werden, ohne dass Entmischungsvorgänge zu erwarten sind. Die Pumpen, die die Komponenten des Polymers fördern, kommen somit nicht mit den harten Glasfasern in Kontakt, so dass diese vor einem vorzeitigen Verschleiß geschützt sind. Da der Additivmix anschließend mit den Komponenten des Polymers vermischt wird, ist eine gleichmäßige Verteilung der Glasfasern im Formteil sichergestellt.

Vorzugsweise liegen die intumeszierenden Additive in pulverförmiger Form vor, und die Glasfasern werden in den Füllstoffen aufgeschlossen. Das heißt, es wird eine Additivmischung hergestellt, der in sich eine gleichmäßige Verteilung der Füllstoffe und der Glasfasern aufweist. In einem pulverförmigen Zustand lassen sich die intumeszierenden Füllstoffe ideal mit den Glasfasern vermischen, sodass ein homogener und fließfähiger Additivmix entsteht.

Vorzugsweise werden die Füllstoffe vor dem Einbringen der Glasfasern fluidisiert, sodass die Füllstoffe, auch wenn diese beispielsweise pulverförmig vorliegen, flüssige oder pastöse Eigenschaften aufweisen. In diesem Zustand lassen sich die Glasfasern ideal in den Füllstoffen verteilen bzw. aufschließen.

Zum Fluidisieren der Füllstoffe wird beispielsweise ein Dissolver verwendet, mit dem zudem eine besonders gute Vermischung der Additive und der Glasfasern möglich ist. Idealerweise werden Glasfasern mit einem Durchmesser von 4 bis 10 µm und einer Länge von 3 bis 10 mm verwendet. Diese Abmessungen für die Glasfasern haben sich als ideal herausgestellt, um sicherzustellen, dass die Glasfasern auch in kleine, enge Bereiche einer Spritzgießform gelangen können. Zudem ist die Länge der Glasfasern ausreichend, um die geforderte Stabilität des aufgeschäumten Kunststoffformteils zu erreichen.

Um die gewünschten intumeszierenden Eigenschaften und die erforderliche Stabilität des Schaumformteils zu erreichen, beträgt der Massen- oder Volumenanteil der Additivmischung zwischen 0,5 % und 5 %, bezogen auf das Kunststoffformteil. Dieser Anteil der Additivmischung stellt einen idealen Kompromiss zwischen dem Aufschäumen des Formteils und der Stabilität des Formteils nach dem Aufschäumen dar.

Erfindungsgemäß ist des Weiteren eine Spritzgießanlage zur Herstellung von intumeszierenden Kunststoffformteilen vorgesehen, die aus einem Kunststoff bestehen, die eine Additivmischung aus intumeszierenden additiven und Glasfasern enthält. Die Spritzgießanlage weist eine Mehrkomponentenmisch- und Dosieranlage auf, die einen Mischkopf mit einer Mischkammer hat. Die Mischkammer weist zumindest einen Eingang für die Komponenten des Polymers und einen Eingang für die Additivmischung auf, sowie einen Ausgang, aus dem die Masse aus den Komponenten des Polymers und der Additivmischung aus der Mischkammer ausfließen kann. Am Eingang für die Additivmischung ist eine Mischeinrichtung zum Mischen der Additive mit den Glasfasern vorgesehen.

Vorzugsweise weist der Mischkopf zwei Eingänge für die Komponenten des Polymers auf, sodass diese getrennt voneinander in die Mischkammer strömen können und sich erst in dieser, insbesondere gemeinsam mit dem Additivmix, vermischen und anschließend miteinander reagieren können. Alternativ können auch mehrere Eingänge vorhanden sein, wobei die Komponenten des Polyurethanschaums auf mehrere Einzelkomponenten aufgeteilt sind, insbesondere, wenn mehrere Polyole eingesetzt werden, und/oder die weiteren Komponenten (Katalysator, Treibmittel, Stabilisator) auf mehrere weitere Behälter aufgeteilt sind.

Die Mehrkomponentenmisch- und Dosieranlage kann zudem einen Dissolver zum Fluidisieren der Additive aufweisen, sodass diese vor dem Vermischen mit den Glasfasern flüssige oder pastöse Eigenschaften aufweisen, wodurch ein ideales Vermischen mit den Glasfasern sowie ein Einspritzen in die Mischkammer möglich sind.

Erfindungsgemäß ist des Weiteren ein Kunststoffformteil vorgesehen, das aus einem Polymer, insbesondere einem Reaktionskunststoff, wie etwa Polyurethan, besteht, das intumeszierende Additive und Glasfasern und gegebenenfalls weitere Additive und/oder Füllstoffe enthält, wobei das Schaumformteil mit einem erfindungsgemäßen Verfahren hergestellt ist.

Für die Herstellung der Schaumformteile sind alle Polymere geeignet, die sich im Reaktionsgießverfahren herstellen lassen. Insbesondere handelt es sich dabei um Reaktionskunststoffe, wobei diese ungeschäumt oder geschäumt sein können. Das Aufschäumen der Kunststoffe für die Herstellung der geschäumten Formteile kann entweder physikalisch oder chemisch erfolgen, wobei das chemische Aufschäumen bevorzugt ist. Dies kann durch die geeignete Auswahl an Reaktanden erfolgen, oder dem Reaktionsgemisch können übliche, dem Fachmann bekannte Aufschäummittel (Treibmittel) zugesetzt werden.

Zweckmäßig werden als intumeszierende Additive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

Für die Ausbildung einer intumeszierenden Schicht durch chemische Intumeszenz sind allgemein drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls das erweichte Bindemittel unter Bildung eines voluminösen, isolierenden Schaums bewirkt.

In einer Ausführungsform, in der die isolierende Schicht durch chemische Intumeszenz gebildet wird, umfassen die intumeszierenden Additive mindestens einen Kohlenstoffgerüstbildner sofern das Bindemittel nicht als solcher verwendet werden kann, mindestens einen Säurebildner, mindestens ein Treibmittel, und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-PO-Polyole. Bevorzugt werden Pentaerythrit, Dipentaerythrit oder Polyvinylacetat eingesetzt.

Es sei erwähnt, dass das Bindemittel im Brandfall selbst auch die Funktion eines Kohlenstofflieferanten haben kann.

Als Dehydrierungskatalysatoren bzw. Säurebildner kommen die in intumeszierenden Flammschutzmitteln üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Treibmittel kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

In einer Ausführungsform, in der die isolierende Schicht durch physikalische Intumeszenz gebildet wird, umfassen die intumeszierenden Additive dämmschichtbildende Additiv mindestens eine thermisch expandierbare Verbindung, wie eine Graphit-Interkallationsverbindung, die auch als Blähgraphit bekannt sind. Diese können ebenfalls ins Bindemittel eingebunden werden.

Als Blähgraphit kommen beispielsweise bekannte Einlagerungsverbindungen von SOₓ, NOₓ, Halogen und/oder Säuren, insbesondere starken Säuren, wie Essigsäure, Salpetersäure oder Schwefelsäure, in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

Als Aschekrustenstabilisatoren bzw. Gerüstbildner kommen die üblicherweise in Flammschutzmitteln verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Das Bindemittel kann ferner als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt, enthalten. Dadurch können temperaturführende Teile gekühlt werden. Bevorzugt ist ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Optional können dem Bindemittel ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate und Addukte. Solche Verbindungen sind beispielsweise beschrieben in S. V Levchik, E. D Weil, Polym. Int. 2004, 53, 1901-1929.

Weitere Vorteile und Merkmale finden sich in der nachfolgenden Beschreibung in Verbindung mit den beigefügten Zeichnungen. In diesen zeigen:
- Figur 1: ein erfindungsgemäßes Formteil, und
- Figur 2: eine erfindungsgemäße Spritzgießanlage zur Herstellung des Formteils aus Figur 1.

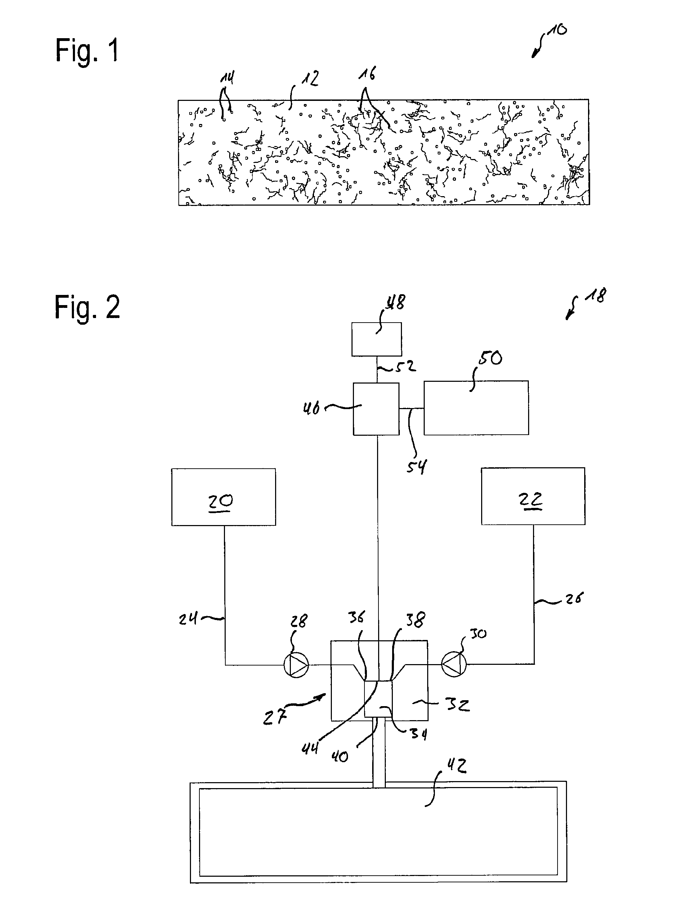

In Figur 1 ist ein Kunststoffformteil 10 gezeigt, das aus einem Polyurethanschaum 12 besteht, der gleichmäßig verteilte intumeszierende Additive 14 und Glasfasern 16 aufweist. Das Kunststoffformteil 10 weist einen im Wesentlichen rechteckigen Querschnitt auf. Abhängig von den Einbaubedingungen und dem Einsatzzweck sind aber auch beliebige andere Formen des Kunststoffformteils möglich.

Ein solches Kunststoffformteil 10 wird als Brandschutzelement, beispielsweise für Wand- oder Deckendurchbrüche, verwendet. Im Brandfall reagieren die intumeszierenden Additive 14 aufgrund der ansteigenden Temperatur miteinander und bilden einen voluminösen Schaum aus schwerentflammbaren Material, sodass das Volumen des Kunststoffformteil 10 vergrößert wird. In expandiertem Zustand kann das Kunststoffformteil 10 den Wand- oder Deckendurchbruch abdichten und so eine Ausbreitung von Rauch oder Feuer verhindern.

Die Glasfasern 16 haben die Aufgabe, das Kunststoffformteil 10 sowohl im in Figur 1 gezeigten Montagezustand wie auch in einem aufgeschäumten Zustand zu stabilisieren und dessen Festigkeit zu erhöhen. Um die Herstellung eines solchen Kunststoffformteils 10 zu vereinfachen, werden statt Glasfasermatten oder gerichtete Glasfasern ungerichtete Glasfasern mit einer Länge von 3 bis 10 mm und einem Durchmesser von 4 bis 10 µm verwendet.

Die Abmessungen von 3 bis 10mm Länge und einem Durchmesser von 4 bis 10 µm haben sich als ideal herausgestellt, um auch bei aufwendigeren Kunststoffformteilen ein Eindringen der Glasfasern 16 in schmale Bereiche einer Spritzgießform sicherzustellen. Zudem bieten solche Glasfasern 16 eine ausreichende Stabilität des Kunststoffformteil 10, ohne dessen Ausbreitungseigenschaften im Brandfall einzuschränken. Da die Glasfasern 16 ungerichtet vorliegen, ist zudem in allen Raumrichtungen eine gleichbleibend hohe Stabilität hergestellt. Außerdem entfällt ein aufwendiges Ausrichten der Glasfasermatten.

In Figur 2 ist eine Spritzgießanlage 18 zur Herstellung eines solchen intumeszierenden Kunststoffformteil 10 gezeigt.

Die Spritzgießanlage 18 hat zwei Speicherbehälter 20, 22, in denen die Komponenten des Polyurethanschaums (Isocyanat, Polyol) getrennt voneinander gelagert sind. Alternativ können auch mehrere Speicherbehälter vorhanden sein, wobei die Komponenten des Polyurethanschaums auf mehrere Behälter aufgeteilt sind, insbesondere, wenn mehrere Polyole eingesetzt werden, und/oder die weiteren Komponenten (Katalysator, Treibmittel, Stabilisator, intumeszierende Additive) auf mehrere weitere Behälter aufgeteilt sind. Des Weiteren sind Leitungen 24, 26 vorgesehen, die jeweils von einem der Speicherbehälter 20, 22 zu einer Mehrkomponenten- und Dosieranlage 27 führen. Jede Leitung 24, 26 weist eine Pumpe 28, 30 auf, um den jeweiligen Grundstoff vom Speicherbehälter 20, 22 zur Mehrkomponenten- und Dosieranlage 27 zu fördern.

Die Mehrkomponentenmisch- und Dosieranlage 27 weist einen Mischkopf 32 mit einer Mischkammer 34 auf. Die Mischkammer 34 hat für jeden der Komponenten einen Eingang 36, 38, der jeweils mit einer der Leitungen 24, 26 verbunden werden kann, um die Komponenten in die Mischkammer 34 zu leiten.

Von der Mischkammer führt ein Ausgang 40 in eine Spritzgießform 42, die das Kunststoffformteil 10 abbildet.

Zur Herstellung eines herkömmlichen Kunststoffformteil aus einem Polyurethanschaum werden die Komponenten des Polyurethanschaums (Isocyanat und Polyol) aus den Speicherbehälter 20, 22 über die Leitungen 24, 26 in den Mischkopf 32 geleitet, in der Mischkammer 34 vermischt und in die Spritzgießform 42 gespritzt, in der die Masse aufschäumt und aushärtet. Die Spritzgießform 42 kann dabei geschlossen oder offen ausgestaltet sein, wobei bei der offenen Ausgestaltung, die Form mit einem Deckel verschlossen wird.

Zusätzlich weist die Mischkammer 34 der erfindungsgemäßen Spritzgießanlage 18 einen weiteren Eingang 44 für eine Additivmischung aus intumeszierenden Additiven 14 und Glasfasern 16 auf. Alternativ können auch zwei Eingänge für Additivmischungen vorhanden sein, etwa für eine aufgeteilte Zudosierung der Additive. Hierbei können die Glasfasern in nur einem Additivzustrom oder in beiden Additivzuströmen enthalten sein. Die Additivmischung wird, wie nachfolgend erläutert wird, aus den Glasfasern 16 und den Additiven 14 in einer Mischeinrichtung 46 hergestellt.

Die Mischeinrichtung 46 weist einen ersten Vorratsbehälter 48 für die intumeszierenden Additiv 14 sowie einen zweiten Vorratsbehälter 50 für die Glasfasern 16 auf. Die intumeszierenden Additive 14 sowie die Glasfasern 16 können von den Vorratsbehälter 48, 50 über Leitungen 52, 54 der Mischeinrichtung 46 zugeführt werden, etwa pneumatisch gefördert werden. In die Mischeinrichtung für die Additive kann auch eine Pumpe oder eine Dosiereinrichtung integriert sein. Die Glasfasern werden dabei aber nicht über Pumpen gefördert.

In der Mischeinrichtung 46 werden die Glasfasern 16 mit den intumeszierenden Additiven 14 vermischt bzw. in diesen aufgeschlossen und anschließend über den Eingang 44 in die Mischkammer 34 geleitet.

Um eine gute Vermischung dieser Stoffe zu erzielen, werden die intumeszierenden Additive 14 vor dem Einbringen der Glasfasern 16 fluidisiert, das heißt diese werden so aufbereitet, dass sie flüssige oder pastöse Eigenschaften aufweisen, sich also wie eine Flüssigkeit verhalten. In diesem Zustand der intumeszierenden Füllstoffe ist eine ideale Vermischung mit den Glasfasern 16 möglich. Um die intumeszierenden Additive 14 zu fluidisieren, weist die Mischeinrichtung 46 beispielsweise einen Dissolver auf.

Nach dem Fluidisieren der intumeszierenden Additive 14 werden die Glasfasern 16 in die Mischeinrichtung 46 eingebracht, wobei sich diese mit den intumeszierenden Additiven 14 zu einer Additivmischung verbinden, in dem die Glasfasern 16 gleichmäßig verteilt sind.

Anschließend wird diese Additivmischung in der Mehrkomponentenmisch- und Dosieranlage 27 über den Eingang 44 in die Mischkammer 34 geleitet und in dieser mit dem Komponenten des Polyurethanschaums (Isocyanat, Polyol), die über die Eingänge 36, 38 in die Mischkammer 34 geführt werden, vermischt. Nachdem sich die Additivmischung mit den Komponenten vermischt hat, wird diese Masse über den Ausgang 40 in die Spritzgießform 42 eingebracht, schäumt in dieser auf und härtet aus.

Dieses Herstellungsverfahren hat den Vorteil, dass ein sehr geringer Verschleiß der Spritzgießanlage 18 erzielt wird. Ein Vermischen der Glasfasern 16 mit den Komponenten des Polyurethanschaums vor dem Einbringen in die Mehrkomponenten- und Dosieranlage 27 würde aufgrund der harten Glasfasern zu einem schnellen Verschleiß der Pumpen 28, 30 führen.

Aus diesem Grund werden die Glasfasern 16 über einen separaten Eingang 44 gemeinsam mit den intumeszierenden Additiven 14 in die Mischkammer 34 eingebracht, sodass die Pumpen 28, 30 der Leitungen 24, 26 nicht mit den Glasfasern 16 in Kontakt kommen und somit keinem erhöhten Verschleiß unterliegen.

Um einen idealen Brandschutz zu erzielen, also die gewünschten Aufschäumeigenschaften in einem Brandfall zu erreichen, beträgt der Massen- oder Volumenanteil der Additivmischung zwischen 0,5 und 5 %, bezogen auf das Kunststoffformteil.

In der hier gezeigten Ausführungsform weist der Mischkopf 32 zwei Eingänge 36, 38 für die Komponenten des Polyurethanschaums 12 auf. Es ist aber auch denkbar, dass nur ein Eingang vorgesehen ist und die Komponenten des Polyurethanschaums unmittelbar vor dem Einbringen in den Mischkopf 32 vermischt werden. Alternativ sind aber auch mehr als zwei Eingänge möglich, so dass die Einzelkomponenten nochmals aufgeteilt werden können.

## Patentansprüche

1. Verfahren zur Herstellung von intumeszierenden Kunststoffformteilen (10), die aus einem Reaktionskunststoff (12) bestehen, der intumeszierende Additive (14) und Glasfasern (16) enthält, wobei das Verfahren die folgenden Schritte aufweist:
- Bereitstellen einer Additivmischung aus den intumeszierenden Additiven (14) und den Glasfasern (16),
- Vermischen der Additivmischung und der reaktiv Komponenten des Kunststoffes, wobei eine homogene Masse erhalten wird,
- Einbringen der Masse aus den Komponenten des Kunststoffs (12) und der Additivmischung in eine Spritzgießform (42) und
- Aushärten und gegebenenfalls Aufschäumen der Masse in der Form.

2. Verfahren nach Anspruch 1, **dadurch gekennzeichnet, dass** die intumeszierenden Additive (14) in pulverförmiger Form vorliegen und die Glasfasern (16) in den intumeszierenden Additiven (14) aufgeschlossen werden.

3. Verfahren nach Anspruch 1 oder 2, **dadurch gekennzeichnet, dass** die intumeszierenden Additive (14) vor dem Einbringen der Glasfasern (16) fluidisiert werden, sodass die intumeszierenden Additive (14) flüssige oder pastöse Eigenschaften aufweisen.

4. Verfahren nach Anspruch 3, **dadurch gekennzeichnet, dass** zum Fluidisieren ein Dissolver verwendet wird.

5. Verfahren nach einem der vorhergehenden Ansprüche, **dadurch gekennzeichnet, dass** Glasfasern (16) mit einem Durchmesser von 4 bis 10 µm und einer Länge von 3 bis 10 mm verwendet werden.

6. Verfahren nach einem der vorhergehenden Ansprüche, **dadurch gekennzeichnet, dass** der Massen- oder Volumenanteil der Additivmischung zwischen 0,5 % und 5 %, bezogen auf das Kunststoffformteil, beträgt.

7. Spritzgießanlage (18) zur Herstellung von intumeszierenden Kunststoffformteilen (10), die aus einem Reaktionskunststoff (12) bestehen, der eine Additivmischung aus intumeszierenden Additiven (14) und Glasfasern (16) enthält, mit einer Mehrkomponentenmisch- und Dosieranlage (27), die einen Mischkopf (32) mit einer Mischkammer (34) aufweist, die zumindest einen Eingang (36, 38) für die Komponenten des Kunststoffs (12) und einen Eingang (44) für die Additivmischung aufweist, sowie einen Ausgang (40), aus dem die Masse aus den Komponenten des Kunststoffs und der Additivmischung aus der Mischkammer (34) ausfließen kann, wobei am Eingang (44) für die Additivmischung eine Mischeinrichtung (46) zum Mischen der intumeszierenden Additive (14) mit den Glasfasern (16) vorgesehen ist.

8. Spritzgießanlage nach Anspruch 7, **dadurch gekennzeichnet, dass** die Mischkammer (34) zwei Eingänge (36, 38) für die Komponenten des Kunststoffs aufweist.

9. Spritzgießanlage nach Anspruch 7 oder 8, **dadurch gekennzeichnet, dass** die Mischeinrichtung (46) einen Dissolver zum Fluidisieren der intumeszierenden Additive (14) aufweist.

10. Kunststoffformteil (10), bestehend aus einem Kunststoff (12), der intumeszierende Additive (14) und Glasfasern (16) enthält, wobei das Kunststoffformteil (10) mit einem Verfahren nach einem der Ansprüche 1 bis 6 hergestellt ist.

11. Kunststoffformteil (10) nach Anspruch 10, wobei der Kunststoff ferner weitere Additive und/oder Füllstoffe enthält.
